# EUROPEAN PATENT APPLICATION

(11) **EP 1 168 029 A2**
(43) Date of publication of application: **02.01.2002**
(21) Application number: 00116790.7
(22) Date of filing: 03.08.2000
(51) Int. Cl.: G02B 21/00

(54) **Optical image separation system and confocal scanner unit**

(30) Priority: 23.06.2000 GB 0015412
(71) Applicant: Yokogawa Electric Corporation, Tokyo 180-8750 (JP); VisiTech International Ltd., Sunderland, SR5 2TA (GB)
(72) Inventor: Kawamura, Shinichirou, c/o Yokogawa Electric Corp., Musashino-shi, Tokyo 180-8750 (JP); Negishi, Hideomi, c/o Yokogawa Electric Corporat., Musashino-shi, Tokyo 180-8750 (JP); Tomosada, Nobuhiro, c/o Yokogawa Electric Corp., Musashino-shi, Tokyo 180-8750 (JP); Ootsuki, Shinya, c/o Yokogawa Electric Corporation, Musashino-shi, Tokyo 180-8750 (JP); Shelbee, Jafer, c/o Visitech International, Ltd., Sunderland, SR5 2TA (GB); Bell, Kenneth, c/o Visitech International, Ltd., Sunderland, SR5 2TA (GB)
(74) Representative: Henkel, Feiler, Hänzel

(57) **Abstract**

To provide an optical image separation system, connected to the confocal image output port of a Nipkow disk type confocal scanner, the system being capable of detecting the light returned from a sample and emitted from the above confocal image output port by separating the return light into a plurality of different wavelength regions respectively, and of holding the throughput high without increasing the cost.

Optical image separation system 300 is realized, which is provided with a dichroic mirror or dichroic mirrors 30 (return light separating means) that separates return light 7 from sample 60, emitted from confocal image output port 110 of confocal scanner 100.

## Description

### [Background of the Invention]

### 1. Field of the Invention

The present invention is related to an optical system in a confocal microscopic observation system. More particularly, the present invention relates to an optical image separation system connected to the confocal image output port of a Nipkow disk type confocal scanner.

### 2. Description of the Prior Art

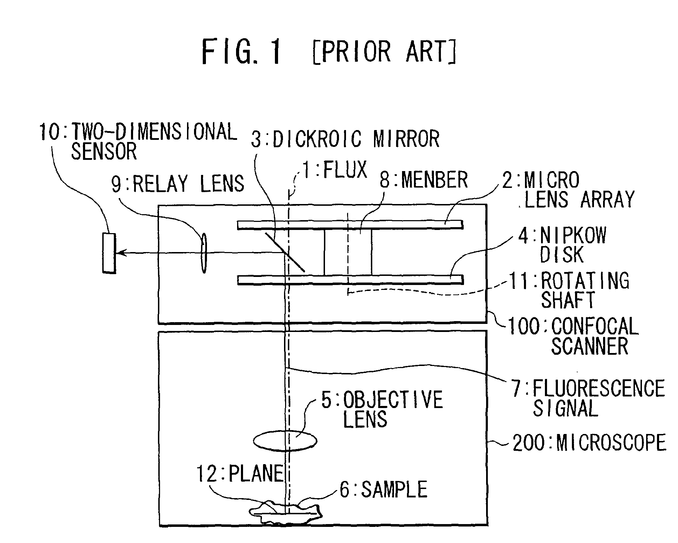

Figure 1 shows an example of Nipkow disk type confocal scanners used with a microscope. In Figure 1, confocal scanner 100 is connected to microscope 200. Illuminating parallel excitation flux 1 (chain line) is converged into individual fluxes by micro lens array disk (hereafter called "ML disk") 2, and passed through individual pinholes of pinhole array disk (hereafter called "Nipkow disk") 4 after being transmitted through dichroic mirror (hereafter called "DM") 3. Flux 1 is then focused on sample 6 by objective lens 5 of the microscope. Fluorescence signal 7 (continuous line) emitted from sample 6 is transmitted again through objective lens 5 and is focused on individual pin holes of Nipkow disk 4. Fluorescence signal 7 passed through the individual pinholes is reflected by DM 3 and forms a fluorescence image on two-dimensional sensor 10 by relay lens 9. DM 3 is designed so as to transmit excitation flux 1 and to reflect desired fluorescence signal 7.

ML disk 2 and Nipkow disk 4 turn around rotating shaft 11, both being mechanically connected to each other by member 8. In this case, individual micro-lenses and pinholes formed on Nipkow disk 4 are arranged so that the individual pinholes scan over plane 12 to be observed on sample 6. The plane on which pinholes of Nipkow disk 4 are arranged, plane 12 to be observed on sample 6, and light detecting surface of two-dimensional sensor 10 are arranged in optically conjugate relation with each other. Accordingly, an optical sectional image of sample 6, that is, a confocal image is formed on two-dimensional sensor 10.

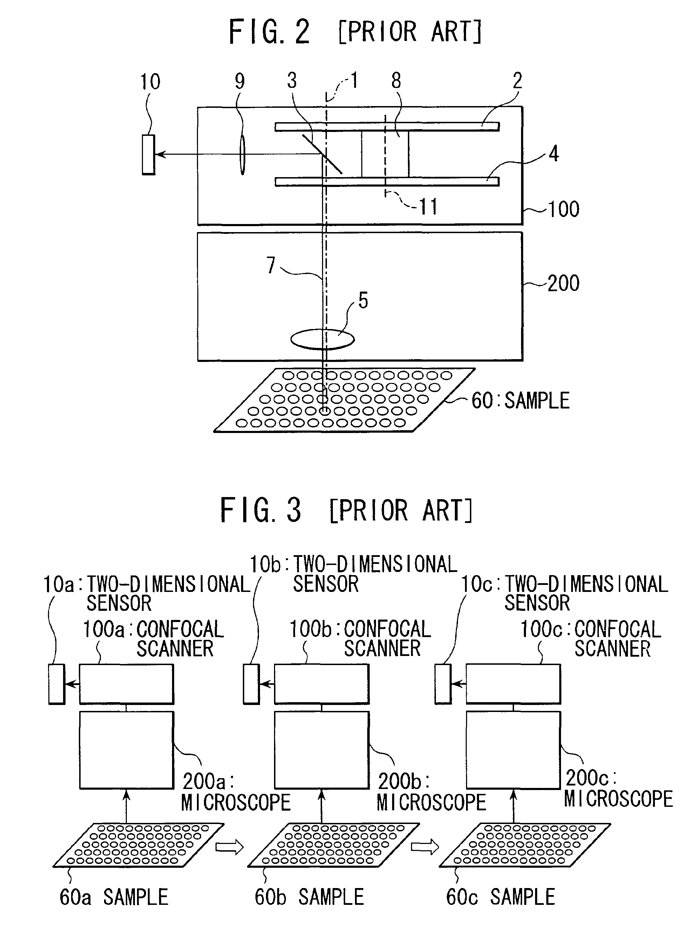

As mentioned above, a plurality of specimens placed on the same plane can be simultaneously observed because a Nipkow disk type confocal scanner uses a two-dimensional sensor. In addition, a confocal image of sample 6 can be formed on the light detecting surface of two-dimensional sensor 10 in a short time by rotating ML disk 2 and Nipkow disk 4 together at a high speed. This makes it possible to acquire at a high speed confocal images of all samples 60, on which many specimens to be inspected are arranged in a matrix as shown in Figure 2, moving them relative to the microscope and the confocal scanner. For this reason, the above confocal scanners are used for a screening technique in developing new medicines . Further, if a sample emitting sufficiently bright fluorescence signals is used as the object of inspection, use of the above-described ML disk 2 is not needed sometimes.

In the above-mentioned confocal scanner, a problem of the number of samples that can be processed per unit time in a screening method shown in Figure 2, that is, a problem of throughput does not occur, as long as cases are limited to those where a sample emits only one type of fluorescence. In many cases, however, a screening method according to the multiple-staining technique is used, in which a plurality of fluorescence wavelengths different depending on sample reactions can be detected by adding separate fluorescence reagents having different fluorescence wavelengths to each specimen of sample 60 or adding a plurality of types of fluorescence reagent to all specimens.

As mentioned above, sample 60 (total number of specimens arranged in a matrix) is first inspected using a DM that has a specific reflection characteristic and can detect the first fluorescence wavelength. Then, after replacing the DM with another DM having another reflection characteristic corresponding to the second fluorescence wavelength, the total number of specimens must be again inspected. Consequently, since it is necessary to repeat DM replacement and inspection of the total number of specimens by the number of required types of wavelengths, there is a problem that throughput is reduced.

It is also considered to adopt a method in which a plurality of sets of microscopes 200a... confocal scanners 100a... and two-dimensional sensors 10a... are arranged for each fluorescence wavelength as shown in Figure 3. In this method, when inspection for fluorescence wavelength λn to sample 60n is completed, sample 60n is sent to the next inspection system n+1 comprising microscope 200n+1, scanner 100n+1 and two-dimensional sensor 10n+1. At the same time, sample 60n-1 for which inspection for fluorescence wavelength λn-1 in inspection system n-1 comprising microscope 200n-1, scanner 100n-1 and two-dimensional sensor 10n-1 is completed is sent to inspection system n. Sample 60n+1 for which inspection for fluorescence wavelength λn+1 in inspection system n+1 comprising microscope 200n+1, scanner 100n+1 and two-dimensional sensor 10n+1 is completed is sent to inspection system n+2. That is, samples for which inspection in each inspection system is completed are sent to next inspection systems respectively. For this reason, however, there is the problem that this method can hold the throughput high but the cost also becomes high because a plurality of confocal scanners, microscopes, etc. is necessary.

The present invention is proposed in consideration of the above-described conditions. It relates to an optical image separation system used by being connected to a Nipkow disk type confocal scanner. Its objective is to provide an optical image separation system that can detect the return light from a sample by separating it into a plurality of different wavelength regions without repeating DM replacement and inspection of the total number of specimens by the required number of wavelength types or without using a plurality of confocal scanners and microscopes as in prior arts, and thus can hold the throughput high without increasing the cost.

### [Summary of the Invention]

The present invention provides an optical image separation system connected to the confocal image output port of a Nipkow disk type confocal scanner for achieving the above described objectives; the optical image separation system comprising a return light separating means that separates the light returned from a sample and emitted from the above confocal image output port into light beams in a plurality of wavelength regions or a plurality of portions of the same wavelength region. In this case, the above confocal image output port means all the ports, such as camera port, eye port, spectral port, etc. for emitting confocal image information formed by passing the return light from a sample through a Nipkow disk from the inside of a confocal scanner to the outside.

According to the optical image separation system of the present invention, the return light from a sample, emitted from the confocal image output port of a confocal scanner, can be separated into any light beams in a plurality of wavelength regions or a plurality of portions of the same wavelength region by the return light separating means. Accordingly, confocal images for every wavelength region separated arbitrarily or for every portion of the same wavelength regions can be acquired simultaneously and at a high speed without deterioration of resolution and without the following operations as in prior arts: repeating DM replacement and inspection of the total number of specimens by the required number of wavelength types, or
using a plurality of sets of confocal scanners and microscopes.

In this case, the return light separating means of the optical image separation system of the present invention may be those in which, the return light from a sample emitted from the confocal image output port of a confocal scanner is separated into the light beams in a plurality of wavelength regions and at least one of the separated light beams is again separated into a plurality of portions of the same wavelength region, or
the above return light from the sample is separated into a plurality of portions of the same wavelength region and at least one of the separated light beams is again separated into light beams in a plurality of wavelength regions.

As Nipkow disk type confocal scanners to which the optical image separation system of the present invention is connected, for example, those described in (a) to (d) below can be listed, but they are not limited to those.
(a) A Nipkow disk type confocal scanner provided with a dichroic mirror that transmits the light in a part of wavelength regions in the incident light and reflects the light in the other part of wavelength regions and a rotatable pinhole array disk having a plurality of pinholes;
   the irradiation light from a light source being incident to the dichroic mirror,
   the light that is transmitted through the dichroic mirror and passed through the pinhole array disk being scanned over a sample,
   the return light from the sample passed through the pinhole array disk being incident to the above dichroic mirror, and
   a part or all of the relevant return light being reflected by the dichroic mirror and emitted from a confocal image output port.
(b) A Nipkow disk type confocal scanner provided with a dichroic mirror that transmits the light of excitation light wavelengths in the incident light and reflects the light of fluorescence wavelengths and a rotatable pinhole array disk having a plurality of pinholes;
   the irradiation light from a light source being incident to the dichroic mirror,
   the light that is transmitted through the dichroic mirror and passed through the pinhole array disk being scanned over a sample,
   the fluorescence from the sample passed through the pinhole array disk being incident to the above dichroic mirror, and
   a part or all of the relevant fluorescence being reflected by the dichroic mirror and emitted from a confocal image output port.
(c) A Nipkow disk type confocal scanner provided with a dichroic mirror that transmits the light in a part of wavelength regions in the incident light and reflects the light in the other part of wavelength regions and a rotatable pinhole array disk having a plurality of pinholes;
   the irradiation light from a light source being incident to the dichroic mirror,
   the light that is reflected by the dichroic mirror and passed through the pinhole array disk being scanned over a sample,
   the return light from the sample passed through the pinhole array disk being incident to the above dichroic mirror, and
   a part or all of the relevant return light being transmitted through the dichroic mirror and emitted from a confocal image output port.
(d) A Nipkow disk type confocal scanner provided with a dichroic mirror that reflects the light of excitation light wavelengths in the incident light and transmits the light of fluorescence wavelengths and a rotatable pinhole array disk having a plurality of pinholes;
   the irradiation light from a light source being incident to the dichroic mirror,
   the light that is reflected by the dichroic mirror and passed through the pinhole array disk being scanned over a sample,
   the fluorescence from the sample passed through the pinhole array disk being incident to the above dichroic mirror, and
   a part or all of the relevant fluorescence being transmitted through the dichroic mirror and emitted from a confocal image output port.

In addition, the optical image separation system of the present invention can adopt the following types of configuration (1) to (8):
(1) Configuration in which the return light separating means is provided with one return light separating dichroic mirror or two or more return light separating dichroic mirrors having different reflection and transmission characteristics from those of the dichroic mirror of the Nipkow disk type confocal scanner.
(2) Configuration in which the reflection wavelength band of the above return light separating dichroic mirror is contained in the reflection wavelength band of the dichroic mirror of the confocal scanner.
(3) Configuration in which the transmission wavelength band of the above return light separating dichroic mirror is contained in the reflection wavelength band of the dichroic mirror of the confocal scanner.
(4) Configuration comprising an image-forming optical system for detecting the light beams in a plurality of wavelength regions or a plurality of portions of the same wavelength region separated by the return light separating means using a detecting means respectively. As a detecting means, for example, a two-dimensional sensor can be used and as an image-forming optical system, for example, a relay lens can be used.
(5) Configuration in which a stray light removing means is provided between the return light separating means and the detecting means; the stray light removing means removing stray light from at least one of the light beams in a plurality of wavelength regions or a plurality of portions of the same wavelength region separated by the return light separating means. As a stray light removing means, for instance, a barrier filter is shown, which removes the light of excitation light wavelengths from at least one of the light beams in a plurality of wavelength regions or a plurality of portions of the same wavelength region.
(6) Configuration in which the above mentioned one return light separating dichroic mirror or two or more return light separating dichroic mirrors are flat plate mirrors or prism mirrors respectively.
(7) Configuration in which a part or all of flat plate mirrors or prism mirrors that are the above return light separating dichroic mirrors are replaced with flat plate glasses or prisms having the partial transmission characteristic without having the wavelength separation characteristic. This flat plate glass or prism separates the incident light into a plurality of portions of the same wavelength region.
(8) Configuration in which a part or all of flat plate mirrors or prism mirrors that are the above return light separating dichroic mirrors are replaced with diffraction gratings or spectral prisms having the wavelength separation characteristic.

The optical image separation systems of the present invention can be connected respectively to each confocal image output port of a confocal scanner having a plurality of confocal image output ports. A plurality of such optical image separation systems concatenated together can also be connected to a confocal image output port of a confocal scanner. Accordingly, the present invention provides confocal scanner units shown in (a) and (b) below.
(a) A confocal scanner unit provided with a Nipkow disk type confocal scanner having a plurality of confocal image output ports and the above optical image separation systems of the present invention;
   each optical image separation system of the present invention being connected to each confocal image output port of the Nipkow disk type confocal scanner respectively.
(b) A confocal scanner unit provided with a Nipkow disk type confocal scanner having a confocal image output port and the above optical image separation systems of the present invention;
   a plurality of optical image separation systems of the present invention being concatenated with each other and connected to the confocal image output port of the Nipkow disk type confocal scanner.

### [Brief Description of Drawing]

Figure 1 shows a configuration drawing indicating an example of conventional confocal scanners used with a microscope.

Figure 2 shows a configuration drawing indicating another example of conventional confocal scanners used with a microscope.

Figure 3 shows a configuration drawing indicating an example of conventional screening methods using a confocal scanner.

Figure 4 shows a configuration drawing indicating a first embodiment of the present invention.

Figure 5 shows a graph indicating the spectral response of the dichroic mirror of the Nipkow disk type confocal scanner used in the first embodiment.

Figure 6 shows a graph indicating the spectral response of the dichroic mirror of the optical image separation system used in the first embodiment.

Figure 7 shows a graph indicating the spectral response of the barrier filter used in the first embodiment.

Figure 8 shows a configuration drawing indicating a second embodiment of the present invention.

Figure 9 shows a configuration drawing indicating a third embodiment of the present invention.

Figure 10 shows a configuration drawing indicating a fourth embodiment of the present invention.

Figure 11 shows a configuration drawing indicating a fifth embodiment of the present invention.

Figure 12 shows a configuration drawing indicating a sixth embodiment of the present invention.

Figure 13 shows a configuration drawing indicating a seventh embodiment of the present invention.

### [Description of the Preferred Embodiments]

### (First Embodiment)

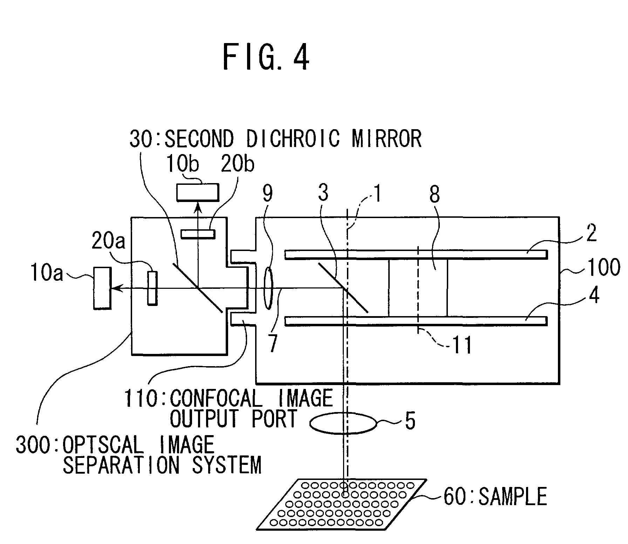

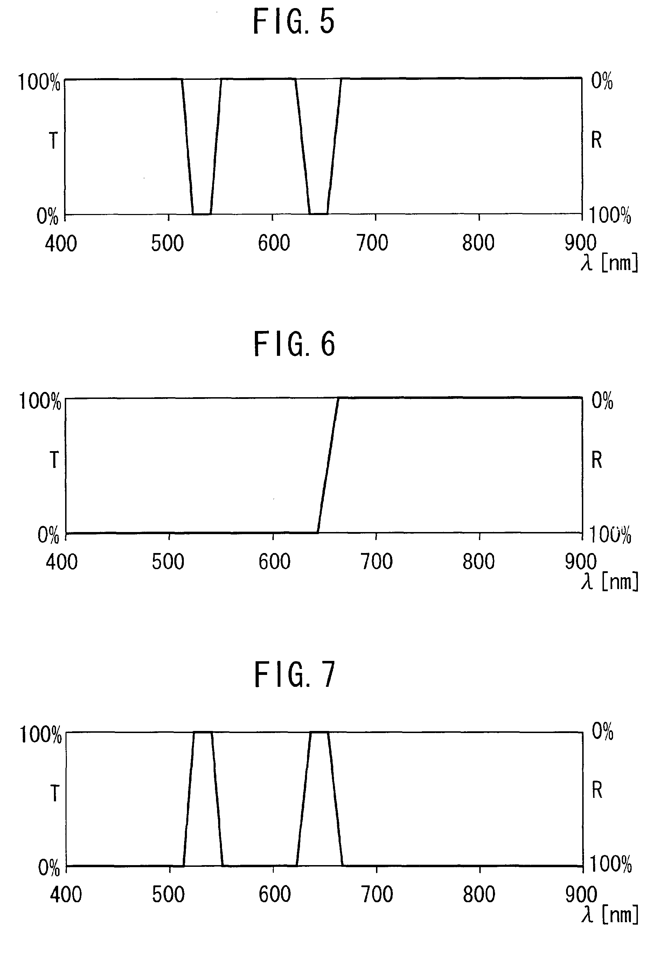

Figure 4 shows a configuration drawing indicating the first embodiment of the present invention. In Figure 4, the same components as those of Figure 1 are given the same symbol and overlapping description will be omitted. Confocal scanner 100 is connected to a microscope. Illuminating parallel excitation flux 1 (chain line) containing the first fluorescence wavelength λ1 = 532 nm and the second wavelength λ2 = 647 nm is converged to individual fluxes by ML disk 2. The fluxes pass through individual pinholes of Nipkow disk 4 after transmitting the first DM 3 composed of flat plate mirror having the spectral response shown in Figure 5, and are focused onto each specimen of sample 60 by objective lens 5 of the microscope to excite fluorescent reagents. For objective lens 5, a converging lens (not shown) may be used to construct an infinite optical system.

Also, in Figure 4, numeral 300 shows an optical image separation system connected to confocal image output port 110 of confocal scanner 100. This optical image separation system 300 is provided with the second DM 30 composed of a flat plate mirror as the return light separating means and barrier filters 20a and 20b having the spectral response shown in Figure 4 as a stray light removing means.

Each specimen of sample 60 is added with fluorescent reagents CY3 and CY5. Fluorescence signal 7 emitted by each fluorescent reagent again passes through objective lens 5 and is focused on individual pinholes of Nipkow disk 4. Fluorescence signal 7 passing through individual pinholes is reflected by DM 3 and emitted from confocal image output port 110 of confocal scanner 100 via relay lens 9 so that each image is formed on two-dimensional sensors 10a and 10b (detecting means).

In optical image separation system 300 connected to confocal image output port 110, fluorescence signal 7 reflected by the above-described DM 3 reaches the second DM 30. Since DM 30 has the spectral response shown in Figure 6, the signal of wavelengths 660 nm to 720 nm of CY5 fluorescent components transmits through DM 30 and reaches two-dimensional sensor 10a after passing through barrier filter 20a having the spectral response shown in Figure 4, while the signal of wavelengths 550 nm to 630 nm of CY3 fluorescent components is reflected by DM 30 and reaches two-dimensional sensor 10b after passing through barrier filter 20b having the spectral response shown in Figure 7. Confocal optical image formed on Nipkow disk 4 is formed on two-dimensional sensors 10a and 10b by relay lens 9.

In this embodiment, an optical sectional image of sample 60, that is, a confocal image is formed on two-dimensional sensors 10a and 10b because the following planes are arranged in an optically conjugate relationship with each other:
the plane on which pinholes of Nipkow disk 4 are arranged,
the plane on sample 60 to be observed, and
the plane of light-detecting surface of two-dimensional sensor 10a or 10b.

Hence, in this embodiment, since the confocal image of sample 60 can be formed simultaneously on the light-detecting surfaces of two-dimensional sensors 10a and 10b, confocal images that are selected and separated for any wavelength for all specimens can be acquired at a high speed by moving sample 60, on which a number of specimens to be inspected are arranged in a matrix, relative to the microscope and confocal scanner. In this case, if the object of inspection is the specimens emitting sufficiently bright fluorescence signals, ML disk 2 may be omitted.

In addition, barrier filters 20a and 20b having the spectral response shown in Figure 7 are used to prevent excitation stray light from reaching two-dimensional sensors mixed into the fluorescence signal. However, if the fluorescence signal is sufficiently larger than excitation stray light signals, barrier filters may be omitted.

Fluorescent reagents used in this embodiment are not limited to CY3 and CY5; any fluorescent reagents can be selected by making the DM have a spectral response for wavelengths corresponding to the combination of reagents. The fluorescent pigments (excitation wavelength peak [nm]/fluorescence wavelength peak [nm]) are listed below as an example. In addition, instead of adding fluorescent reagents, techniques to integrate proteins that emit specific fluorescence respectively to be expressed with gene manipulation may be used.

### -Fluorescence reagent-

BODYPY-FL (503/512), FITC (494/520), R-phycoerythrin (480/578), GFP (Green Fluorescent Protein)(488/509), YOYO-1 (491/509), TOTO-1 (514/533), Ethidium Bromide (510/595), Propidium Iodide (494 or 536/617), Acridine Orange (487/526 or 650), Rhodamine 123 (505/534), DiO (484/505), DiA (491/595), Di-8-ANEPPS (498/680), DiOC5.6.7 (478/500 to 510), BCECF (490/530), Fluo-3 (506/526), Calcium Green (506/533), Fura red (480 to 500/640 or 425 to 450), Fura red and Fluo-3 (503/526 or 640), Magnesium Green (506/532)

### (Second Embodiment)

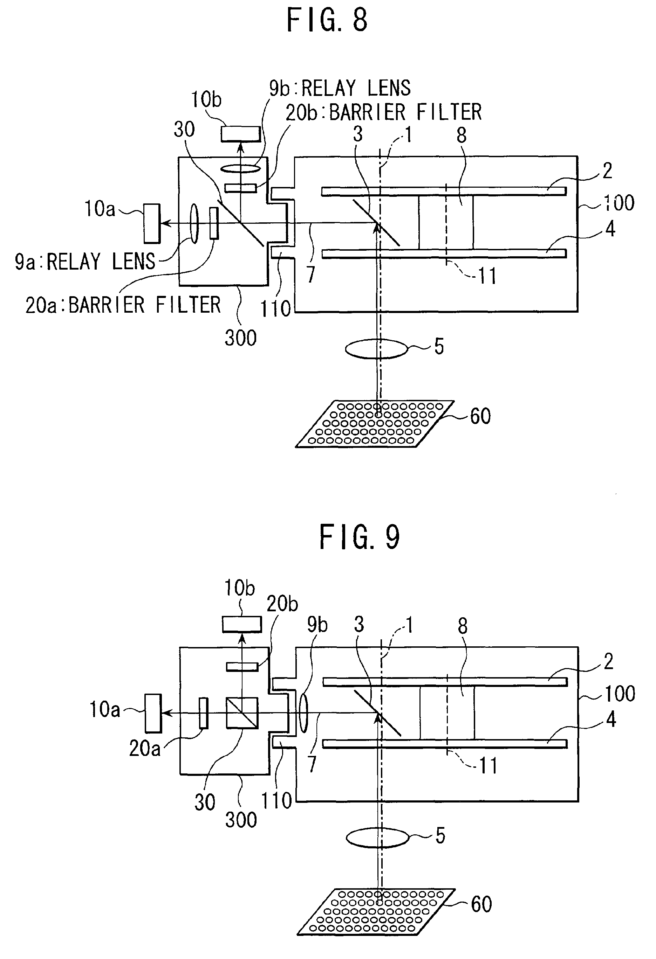

Figure 8 shows a configuration drawing indicating the second embodiment of the present invention. In Figure 8, the same components as those of Figure 1 are given the same symbol and overlapping description will be omitted. This embodiment improves, in optical image separation system 300, the aberration in barrier filters 20a and 20b and the degree of positional freedom of two-dimensional sensors 10a and 10b on each optical axis by positioning relay lenses 9a and 9b (image-forming optical system) between DM 30 and two-dimensional sensors 10a and 10b respectively. Relay lenses 9a and 9b may have different shapes and focal lengths.

### (Third Embodiment)

Figure 9 shows a configuration drawing indicating the third embodiment of the present invention. In Figure 9, the same components as those of Figure 4 are given the same symbol and overlapping description will be omitted. This embodiment shows an example in which, in optical image separation system 300, the second DM 30 is a prism mirror. The prism mirror has an advantage that it is easier to handle compared with flat plate mirrors.

### (Fourth Embodiment)

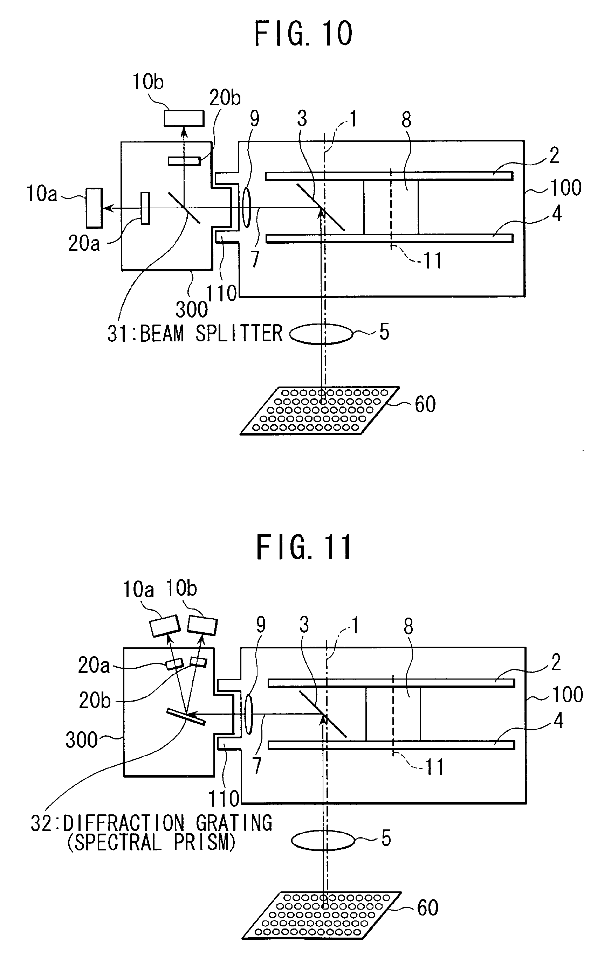

Figure 10 shows a configuration drawing indicating the fourth embodiment of the present invention. In Figure 10, the same components as those of Figure 4 are given the same symbol and overlapping description will be omitted. This embodiment shows an example in which, in optical image separation system 300, the second DM 30 is beam splitter 31 composed of a flat plate glass (or a prism) having the partial transmission characteristic without having the wavelength separation characteristic. Fluorescence signals split by beam splitter 31 have the same fluorescent spectrum and the images in which resolution, sensitivity, and the angle of view are varied can be acquired simultaneously on two two-dimensional sensors 10a and 10b. Although partial transmittance is mainly used with a ratio of 50:50 in many cases, the flat plate glass can be used with any partial transmittance not limited to this range.

### (Fifth Embodiment)

Figure 11 shows a configuration drawing indicating the fifth embodiment of the present invention. In Figure 11, the same components as those of Figure 1 are given the same symbol and overlapping description will be omitted. This embodiment shows an example in which, in optical image separation system 300, the second DM 30 is a diffraction grating (or spectral prism) 32 having a wavelength separation characteristic. This embodiment can select any wavelength by changing the angle of incidence of fluorescence signal 7 to diffraction grating (or spectral prism) 32.

### (Sixth Embodiment)

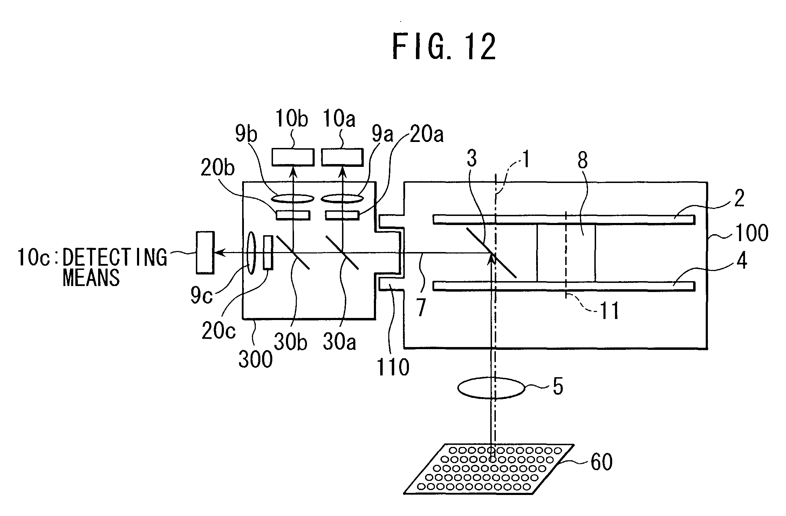

Figure 12 shows a configuration drawing indicating the sixth embodiment of the present invention. In Figure 12, the same components as those of Figure 4 are given the same symbol and overlapping description will be omitted. This embodiment shows an example in which, in optical image separation system 300, the second DM 30a, the third DM 30b (return light separating means), and relay lenses 9a, 9b, and 9c (image-forming optical system) are arranged and confocal fluorescence images having each of the wavelengths separated into three by two-dimensional sensors 10a, 10b, and 10c (detecting means) are acquired simultaneously.

### (Seventh Embodiment)

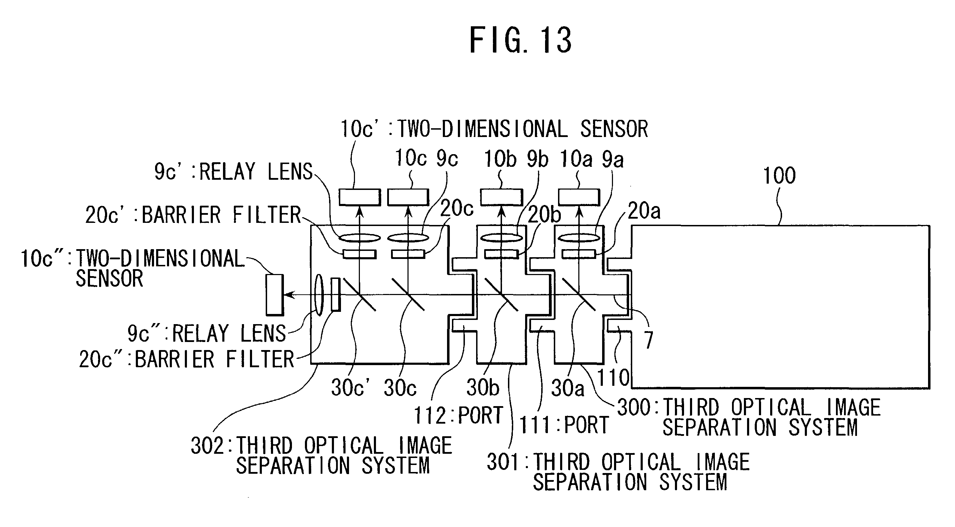

Figure 13 shows a configuration drawing indicating the seventh embodiment of the present invention. In Figure 13, the same components as those of Figure 1 are given the same symbol and overlapping description will be omitted. This embodiment shows an example in which the first, second, and third optical image separation systems 300, 301, and 302 are concatenated with each other via ports 111 and 112 and these systems are connected to confocal image output port 110 of confocal scanner 100.

First, wavelength component λa is separated from confocal fluorescence signal 7 emitted from confocal image output port 110 of confocal scanner 100 by DM 30a placed in first optical image separation system 300, the excitation stray light component is removed with barrier filter 20a, and then an image is formed on two-dimensional sensor 10a by relay lens 9a. Second, wavelength component λb is separated from the fluorescence signal component that has transmitted through DM 30a by DM 30b placed in second optical image separation system 301, the excitation stray light component is removed with barrier filter 20b, and then another image is formed on two-dimensional sensor 10b by relay lens 9b. Third, wavelength component λc is separated from the fluorescence signal component that has transmitted through DM 30b by DM 30c placed in third optical image separation system 302, the excitation stray light component is removed with barrier filter 20c, and then the third image is formed on two-dimensional sensor 10c by relay lens 9c. In a similar manner, wavelength component λc' of the fluorescence signal component that has transmitted through DM 30c is separated by DM 30c' placed in third optical image separation system 302 and its image is formed on two-dimensional sensor 10c' by relay lens 9c' after the excitation stray light component is removed by barrier filter 20c'. An image of all the fluorescence signal components that have transmitted through DM 30c' is formed in two-dimensional sensor 10c" by relay lens 9c" after the excitation stray light component is removed by barrier filter 20c" placed in third optical image separation system 302.

As shown in this embodiment, any wavelength separation for a fluorescence wavelength component can be easily carried out and confocal images of different wavelength components can be simultaneously observed by concatenating optical image separation systems, each provided with a DM or DMs having a characteristic to separate a required wavelength component as required, and by connecting them to a confocal image output port of a confocal scanner. In addition, it is also easy to freely change the layout of the systems by changing optical paths suitably using fold-back mirrors.

As mentioned above, according to the optical image separation system of the present invention, the light returned from a sample and emitted from the confocal image output port of a confocal scanner can be separated into light beams in a plurality of any wavelength regions or to a plurality of portions of the same wavelength region. Therefore, confocal images for every arbitrarily separated wavelength region or every portion of the same wavelength region can be acquired simultaneously at a high speed without deteriorating the resolution, and without repeating DM replacement and inspection of the total number of specimens by the number of required wavelengths or without using a plurality of confocal scanners and microscopes. In addition, the configuration of the optical image separation system can be easily changed to meet a plurality of wavelength regions or a plurality of portions of the same wavelength region requiring separation.

## Claims

1. An optical image separation system connected to the confocal image output port of a Nipkow disk type confocal scanner, provided with a return light separating means that separates the light returning from a sample, emitted from the above confocal image output port into light beams in a plurality of wavelength regions or a plurality of portions in the same wavelength region.

2. An optical image separation system in accordance with claim 1, wherein said Nipkow disk type confocal scanner is provided with a dichroic mirror which transmits the light in a part of the incident light wavelength regions and reflects the light in the other part of the incident light wavelength regions, and a rotatable pinhole array disk which has a plurality of pinholes; and
the irradiating light from a light source being incident to the dichroic mirror,
the light that transmits through the dichroic mirror and passes through the pinhole array disk is scanned over a sample, and
the return light from the sample that passes through the pinhole array disk being incident to the above dichroic mirror and emitted from said confocal image output port by reflecting a part or all of the relevant return light with the above dichroic mirror.

3. An optical image separation system in accordance with claim 1, wherein said Nipkow disk type confocal scanner is provided with a dichroic mirror which transmits the light having the excitation light wavelengths in the incident light and reflects the light having fluorescence wavelengths in the incident light, and a rotatable pinhole array disk which has a plurality of pinholes; and
the irradiating light from a light source being incident to the dichroic mirror,
the light that transmits through the dichroic mirror and passes through the pinhole array disk being scanned over a sample, and
the fluorescence from the sample that passes through the pinhole array disk being incident to the above dichroic mirror and emitted from said confocal image output port by reflecting a part or all of the relevant fluorescence with the above dichroic mirror.

4. An optical image separation system in accordance with claim 1, wherein said Nipkow disk type confocal scanner is provided with a dichroic mirror which transmits the light in a part of the incident light wavelength regions and reflects the light in the other part of the incident light wavelength regions , and a rotatable pinhole array disk having a plurality of pinholes; and
the irradiating light from a light source is incident to the dichroic mirror,
the light that is reflected from the dichroic mirror and passes through the pinhole array disk, being scanned over a sample, and
the return light from the sample that passes through the pinhole array disk being incident to the above dichroic mirror and emitted from said confocal image output port by transmitting a part or all of the relevant return light through the above dichroic mirror.

5. An optical image separation system in accordance with claim 1, wherein said Nipkow disk type confocal scanner is provided with a dichroic mirror which reflects the light having the excitation light wavelengths in the incident light and transmits the light having fluorescence wavelengths in the incident light, and a rotatable pinhole array disk which has a plurality of pinholes; and
the irradiating light from a light source being incident to the dichroic mirror,
the light that is reflected from the dichroic mirror and passes through the pinhole array disk being scanned over a sample, and
the fluorescence from the sample that passes through the pinhole array disk being incident to the above dichroic mirror and emitted from said confocal image output port by transmitting a part or all of the relevant fluorescence through the above dichroic mirror.

6. An optical image separation system in accordance with any of claims 2 to 5, wherein the return light separating means is provided with one dichroic mirror or two or more dichroic mirrors for separating the return light, whose reflecting and transmitting characteristics are different from those of said Nipkow disk type confocal scanner dichroic mirror.

7. An optical image separation system in accordance with claim 6, wherein the reflection wavelength bands of said return light separating dichroic mirror are contained in the reflection wavelength bands of said confocal scanner dichroic mirror.

8. An optical image separation system in accordance with claim 6 or claim 7, wherein the transmission wavelength bands of said return light separating dichroic mirror are contained in the reflection wavelength bands of said confocal scanner dichroic mirror.

9. An optical image separation system in accordance with any of claims 1 to 8, wherein an image-forming optical system is provided for detecting the light in a plurality of wavelength regions or a plurality of portions of the same wavelength region separated by the return light separating means with each detecting means.

10. An optical image separation system in accordance with claim 9, wherein a stray light removing means is provided between the return light separating means and the detecting means;
the stray light removing means removing stray light from at least one of the light beams in a plurality of wavelength regions or a plurality of portions of the same wavelength region separated by the return light separating means.

11. An optical image separation system in accordance with any of claims 6 to 10, wherein one return light separating dichroic mirror or two or more return light separating dichroic mirrors are flat plate mirrors or prism mirrors respectively.

12. An optical image separation system in accordance with claim 11, wherein a part or all of the flat plate mirrors or prism mirrors of the return light separating dichroic mirrors are replaced with flat plate glasses or prisms that have the partial transmission characteristic without having the wavelength separation characteristic.

13. An optical image separation system in accordance with claim 11, wherein a part or all of the flat plate mirrors or prism mirrors of the return light separating dichroic mirrors are replaced with diffraction gratings or spectral prisms having the wavelength separation characteristic.

14. A confocal scanner unit provided with a Nipkow disk type confocal scanner having a plurality of confocal image output ports and the optical image separation systems in accordance with any of claims 1 to 13,
the optical image separation systems being connected to a confocal image output port of the Nipkow disk type confocal scanner respectively.

15. A confocal scanner unit provided with a Nipkow disk type confocal scanner having a confocal image output port and optical image separation systems in accordance with any of claims 1 to 13,
a plurality of the above optical image separation systems being concatenated with each other, and
these optical image separation systems concatenated with each other being connected to the confocal image output port of the Nipkow disk type confocal scanner.
